# EUROPÄISCHE PATENTANMELDUNG

(11) **EP 3 637 131 A2**
(43) Veröffentlichungstag der Anmeldung: **15.04.2020**
(21) Anmeldenummer: 19196858.5
(22) Anmeldetag: 12.09.2019
(51) Int. Cl.: G01S 7/481, G01S 17/42

(54) **OPTOELEKTRONISCHER SENSOR ZUR DETEKTION VON OBJEKTEN UND AUTONOMES FAHRZEUG MIT EINEM SOLCHEN SENSOR**

(30) Priorität: 10.10.2018 DE 102018124974
(71) Anmelder: SICK AG, 79183 Waldkirch (DE)
(72) Erfinder: Ringwald, Siegfried, 79215 Elzach (DE)

(57) **Zusammenfassung**

Die Erfindung betrifft einen optoelektronischen Sensor zur Detektion von Objekten in seinem Sichtbereich mit einem Lichtsender zur Aussendung eines Sendelichtstrahls in Form von Lichtpulsen, einer Sendeoptik, die den Sendelichtstrahl in Teilstrahlen aufspaltet, einem ortsauflösenden Empfänger zum Empfang von Remissionen des Lichts an Objekten im Sichtbereich und Bereitstellung von Empfangssignalen in Abhängigkeit des einfallenden Lichts, einer Empfangsoptik zum Abbilden der Remissionen auf den Empfänger und einer Steuer- und Auswerteeinheit zur Ansteuerung des Lichtsenders und zur Auswertung der Signale des Empfängers, wobei die Auswerteeinheit ausgebildet ist, aus den Auftreffpunkten des Lichts die Richtung, aus der die Remission erfolgt ist, zu ermitteln und aus einer Laufzeit zwischen Aussendung und Empfang eines Lichtpulses die Entfernung der Remission zu ermitteln. Erfindungsgemäß weist die Sendeoptik ein diffraktives optisches Element auf.

## Beschreibung

Die Erfindung betrifft einen optoelektronischer Sensor zur Detektion von Objekten nach dem Oberbegriff des Anspruchs 1 und ein autonomes Fahrzeug, insbesondere ein fahrerloses Transportsystem nach dem Oberbegriff von Anspruch 5.

Aus der EP 2 354 806 A1 ist ein gattungsgemäßer Sensor bekannt. Solche Sensoren sind auch unter der Bezeichnung "Solid State Scanner" bekannt, da sie wie ein Scanner eine ebene Fläche optisch abtasten können, aber dennoch keine beweglichen Teile, wie rotierende Spiegel oder dergleichen, aufweisen. Der bekannte Sensor hat den Nachteil, dass einerseits die Sende- und Empfangsoptik sehr aufwändig ist und andererseits, dass sehr hohe Sendelichtleistungen gefordert sind, da das Sendelicht in diesem Scanner in 360° aufgeweitet wird. Die Reichweite solcher Sensoren ist daher sehr begrenzt.

Ausgehend von diesem Stand der Technik ist es Aufgabe der Erfindung, einen verbesserten Sensor bereitzustellen, mit dem diese Nachteile vermieden werden können und ein damit ausgerüstetes autonomes Fahrzeug bereitzustellen.

Diese Aufgabe wird gelöst durch einen Sensor mit den Merkmalen des Anspruchs 1 und ein Fahrzeug mit den Merkmalen des Anspruchs 5.

Der optoelektronische Sensor zur Detektion von Objekten in seinem Sichtbereich umfasst:
- einen Lichtsender zur Aussendung eines Sendelichtstrahls in Form von Lichtpulsen,
- eine Sendeoptik, die den Sendelichtstrahl in Teilstrahlen aufspaltet,
- einen ortsauflösenden Empfänger zum Empfang von Remissionen des Lichts an Objekten im Sichtbereich und Bereitstellung von Empfangssignalen in Abhängigkeit des einfallenden Lichts,
- eine Empfangsoptik zum Abbilden der Remissionen auf den Empfänger,
- eine Steuer- und Auswerteeinheit zur Ansteuerung des Lichtsenders und zur Auswertung der Signale des Empfängers, wobei die Auswerteeinheit ausgebildet ist, aus den Auftreffpunkten des Lichts die Richtung, aus der die Remission erfolgt ist, zu ermitteln und aus einer Laufzeit zwischen Aussendung und Empfang eines Lichtpulses die Entfernung der Remission zu ermitteln.

Erfindungsgemäß weist die Sendeoptik ein diffraktives optisches Element auf.

Der Einsatz eines diffraktiven Elements hat den besonderen Vorteil, dass die Sende- und die Empfangsoptik sehr viel einfacher gestaltet werden kann. Die Sendeoptik besteht aus dem diffraktiven optischen Element (DOE) und die Empfangsoptik kann durch ein gewöhnliches Objektiv gebildet sein, das die Remissionen auf den Empfänger abbildet.

Ein weiterer ganz wesentlicher Vorteil ist die Möglichkeit, mit dem DOE den Sendestrahl in eine gezielte Art aufzuweiten. So kann der Sendestrahl in Einzelstrahlen aufgespalten werden, und/oder es kann ein Strahl zu einer Linie aufgeweitet werden. Auf diese Weise lässt sich das Sendelicht in nur die interessierenden Bereiche des Sichtfeldes lenken, so dass sich Energie des Sendelichts nur in kleinere Bereiche verteilt und nicht über einen großen Winkelbereich wie im Stand der Technik. Dadurch kann letztendlich die Reichweite erhöht werden.

Zusätzlich ergibt sich durch den Einsatz eines DOE die Möglichkeit die Energie, die im Sendelicht steckt, in gezielter Weise in Winkelbereiche zu verteilen. Auf diese Weise kann dem Problem begegnet werden, das sich durch die Kosinusverteilung der Lichtemission bei der Remission ergibt. Wenn also das Sendelicht auf eine schräg gestellte Oberfläche trifft, wird weniger Licht zurückempfangen als bei einer zur Detektionsrichtung senkrecht stehenden Oberfläche. Wenn ein Objekt und der Blickwinkel darauf jedoch bekannt ist, zum Beispiel eine Wand, dann kann das DOE so ausgebildet sein, dass die Intensitätsverteilung innerhalb des aufgeweiteten Sendelichts so verteilt wird, das der Kosinusverteilung entgegengewirkt wird. Damit wird die Remission quasi unabhängig vom Sendelichtwinkel.

Vorteilhafterweise weist der Lichtempfänger eine zweidimensionale Matrix von Empfangselementen auf, die insbesondere als SPAD (Single Photon Avalanche Diode) ausgebildet ist. SPADs haben den Vorteil, dass sie bereits einzelne Photonen detektieren können und keine Hochspannung benötigen.

Für konkrete Anwendungen ist es vorteilhaft, wenn innerhalb des Sichtbereichs ein Schutzfeld definiert ist und die Sendeoptik derart ausgebildet ist, dass eine Remission an einem Objekt, das die Form des Schutzfeldrandes hat, an jedem Punkt des Schutzfeldrandes eine Remission erzeugt, deren Intensität unabhängig vom Sichtwinkel, unter dem die Remissionen detektiert wird, ist und unabhängig von der Entfernung der Remission ist. Das kann nur mit einem DOE sinnvoll erreicht werden und hat den Vorteil, dass letztendlich die Reichweite maximiert ist, denn alle Lichtleistung im Sendelicht ist ausgeglichen verteilt. Insbesondere kann Lichtleistung in diejenigen Winkelbereiche gebracht werden, die schwache Remission aufweisen. Das sind zum Beispiel weit entfernte und schräg liegende Flächen.

Es ist ebenso mit einem DOE möglich in Bereiche, zum Beispiel in große Sendewinkel, in denen eine Winkelauflösung nicht gefragt ist, das Sendelicht nur in einzelne wenige Lichtstrahlen aufzuspalten. Dadurch lässt sich Lichtintensität sparen, so dass sich die hier gesparte Intensität in andere Winkelbereiche umverteilen lässt, zum Beispiel im Falle eines autonomen Fahrzeugs in Vorwärtsfahrtrichtung, so dass in Vorwärtsrichtung die Reichweite weiter erhöht werden kann.

Ein Gegenstand der Erfindung ist auch ein autonomes Fahrzeug, insbesondere fahrerloses Transportsystem (FTS), das den erfindungsgemäßen Sensor umfasst.

Zumindest ein erster Teil des Schutzfeldes liegt in Fahrtrichtung vor dem Fahrzeug und ist zumindest bereichsweise rechteckförmig ausgebildet, mit zwei in Fahrtrichtung verlaufenden Seiten und einer diese Seiten verbindenden Frontseite quer zur Fahrtrichtung. Bei einem solchen Schutzfeld, das von bisherigen FTS als Standard bekannt ist, kommt die erfindungsgemäße Umverteilung der Lichtintensität besonders zum Tragen. Denn Objekte, die das Schutzfeld tangieren, werden an den Seiten wie an der Front gleichermaßen gut erkannt, durch die oben beschriebene Umverteilung der Lichtintensität.

Vorteilhafterweise ist der erste Teil des Schutzfeldes durch den linienförmig aufgeweiteten Sendelichtstrahl ausgeleuchtet und in größeren Winkelbereichen, die über den ersten Teil hinausgehen, ist das Schutzfeld durch einzelne, begrenzte Lichtstrahlen in lichtintensitätssparender Weise gebildet.

Im Folgenden wird die Erfindung anhand eines Ausführungsbeispiels unter Bezugnahme auf die Zeichnung im Einzelnen erläutert. In der Zeichnung zeigen:
- Fig. 1: eine schematische Darstellung des erfindungsgemäßen Sensors;
- Fig. 2: eine schematische Draufsicht auf ein erfindungsgemäßes FTS mit erfindungsgemäßem Sensor;
- Fig. 3: ein schematisches Diagramm, in dem Sendelichtintensität gegen den Sendewinkel aufgetragen ist.

Ein erfindungsgemäßer, optoelektronischer Sensor 10 ist im Frontbereich an einem fahrerlosen Transportsystem FTS angeordnet und dient zur Erkennung von Objekten 12 im Sichtbereich 14, was zur Navigation oder auch zur Vermeidung von Zusammenstößen genutzt wird.

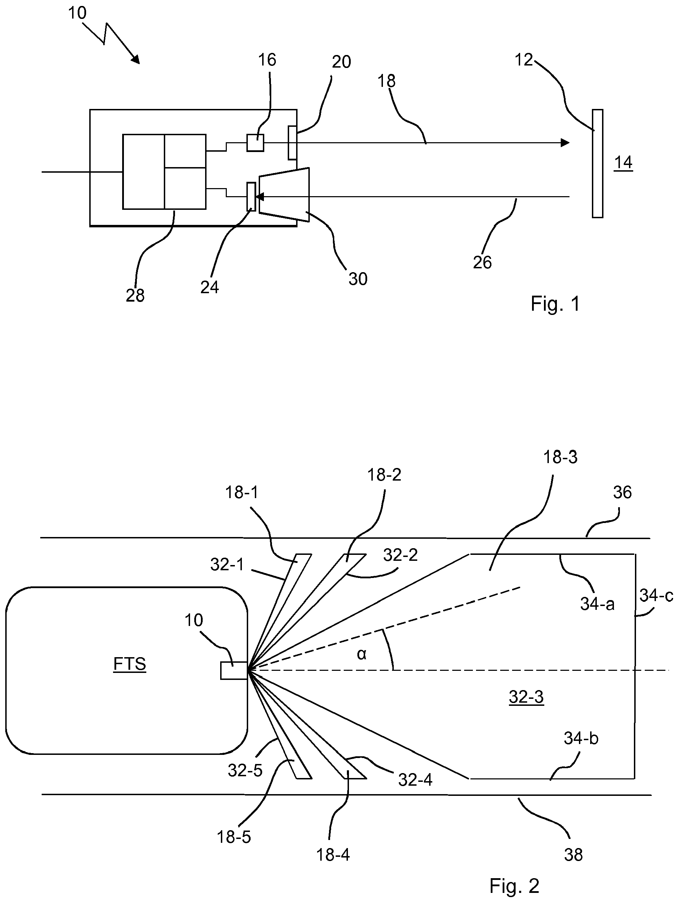

Der erfindungsgemäße Sensor 10 weist einen Lichtsender 16 zur Aussendung eines Sendelichtstrahls 18 in Form von Lichtpulsen auf. Der Sendelichtstrahl 18 wird durch eine Sendeoptik 20 geformt, die den Sendelichtstrahl 18 in Teilstrahlen, wie weiter unten beschrieben wird, innerhalb einer Scanebene aufspaltet. Die Scanebene liegt in dem Ausführungsbeispiel in der Zeichenebene der Fig. 2, also parallel zum Boden und senkrecht zur Zeichenebene der Fig. 1.

Weiter weist der Sensor 10 einen ortsauflösenden Empfänger 24 zum Empfang von Remissionen 26 des Lichts 18 an den Objekten 12 im Sichtbereich 14 auf. Der Empfänger 24 ist vorzugsweise als zweidimensionales SPAD Array ausgebildet, auf den die Remissionen in der Scanebene 22 abgebildet werden. Der Empfänger 24 weist beispielsweise 8x256 Pixel auf, ist also vorzugsweise ein mehrzeiliges Array mit der Zeilenrichtung innerhalb der Scanebene 24. Mittels des Empfängers 24 wird einfallendes Licht in elektrische Empfangssignale umgewandelt, die einer Steuer- und Auswerteeinheit 28 zur Auswertung zugeführt sind.

Mittels einer Empfangsoptik 30 werden die Remissionen 26 auf den Empfänger 24 abgebildet. Der Sensor 10 soll ein Solid State Sensor sein. Deshalb ist die Empfangsoptik 30 eine Weitwinkeloptik, die die Remissionen 26 aus einem großen Winkelbereich einfängt. In dem Ausführungsbeispiel beträgt der Scanwinkel etwa 160°.

Die Steuer- und Auswerteeinheit 28 dient zur Ansteuerung des Lichtsenders 16 zur Abgabe der Lichtpulse und zur Auswertung der Empfangssignale des Empfängers 24. Die Auswerteeinheit ist ausgebildet, aus den Auftreffpunkten des Lichts, also aus der optischen Abbildung, die jeweilige Richtung, aus der eine Remission 26 erfolgt ist, zu ermitteln. Damit ist der Scanwinkel α bekannt. Weiter ist die Auswerteeinheit 28 ausgebildet, eine Laufzeit t der Lichtpulse zwischen Aussendung des Lichtpulses und Empfang des Lichtpulses zu erfassen und daraus über die Lichtgeschwindigkeit die Entfernung der Remission 26 zu ermitteln. Auf diese Weise kann der Ort der Remission 26 und damit ein Objekt 14, das die Remission 26 verursacht, über Abstand und Scanwinkel lokalisiert werden.

Erfindungsgemäß ist die Sendeoptik 20 als ein diffraktives optisches Element DOE ausgebildet. Mit dem DOE wird der Sendelichtstrahl 18 in gezielter Art aufgeweitet. Das bedeutet, dass ein Lichtpuls sich in durch das DOE bestimmter Form ausbreitet, so dass bestimmte Bereiche des Sichtbereich 14 mit Sendelicht beleuchtet werden, also der Sendelichtstrahl 18 in Einzelstrahlen aufgespalten wird.

In dem Ausführungsbeispiel wird der Sendelichtstrahl 18 in fünf Einzelstrahlen 18-1 bis 18-5 aufgespalten. Der zentrale Strahl 18-3 ist dabei als in der Scanebene liegende Linie verbreitert und überdeckt einen Winkelbereich von ca. -35° bis +35°, wobei 0° in Fahrtrichtung des FTS 12 liegt. Rechts und links vom zentralen Strahl 18-3 liegen die Einzelstrahlen 18-1 und 18-2 bei ca. -68° und -48° und die Einzelstrahlen 18-4 und 18-5 bei ca. +48° und +68°. Sie sind also symmetrisch zur 0°-Achse.

Selbstverständlich sind die Lichtstrahlen 18-x ("x" steht für 1 bis 5) nicht entfernungsmäßig begrenzt, sondern erstrecken sich bis Unendlich oder bis sie auf ein Objekt treffen. Die Darstellung in Fig. 2 soll ein Schutzfeld 32 andeuten, das durch die Sendelichtstrahlen 18-x beleuchtet wird. Dieses Schutzfeld 32 besteht aus den beleuchteten Bereichen, wobei ein erster Teil 32-3 des Schutzfeldes 32 in Fahrtrichtung vor dem FTS liegt und zumindest bereichsweise rechteckförmig ausgebildet ist, mit zwei in Fahrtrichtung verlaufenden Rändern 34a und 34b und einem diese Ränder verbindenden frontseitigem Rand 34c quer zur Fahrtrichtung. Dieser erste Teil 32-3 des Schutzfeldes 32 wird durch den linienförmig aufgeweiteten Sendelichtstrahl 18-3 ausgeleuchtet. Die Schutzfeldbereiche links und rechts davon, die mit 32-1, 32-2 und 32-4, 32-5 bezeichnet sind, werden durch die Einzelstrahlen 18-1, 18-2 und 18-4, 18-5 ausgeleuchtet.

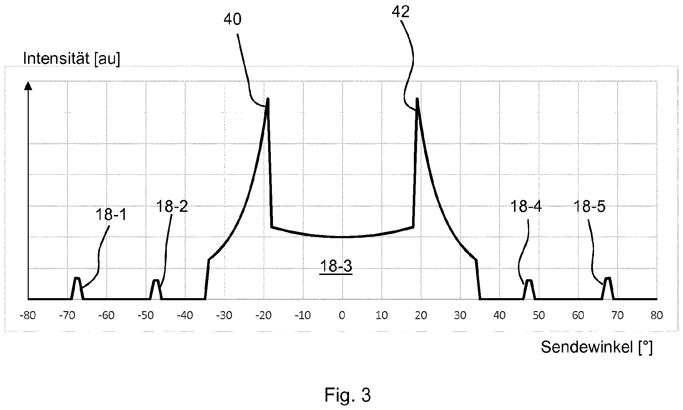

Zusätzlich zu dieser Aufteilung in verschiedene Strahlen bewirkt das DOE aber auch eine gezielte Intensitätsverteilung des Lichtpulses über den Scanwinkel α gesehen. Eine solche Verteilung ist in Fig. 3 dargestellt. Diese Intensitätsverteilung ist für eine Anwendungssituation wie in Fig. 2 dargestellt, mit einem FTS, das durch eine durch seitliche Objekte 36 und 38 gebildete Gasse fährt, sinnvoll. Solche Gassen kommen in Lagerhallen, in denen FTS eingesetzt werden, häufig vor, z.B. sind solche Gassen zwischen Regalen gebildet.

Die Schutzfeldbereiche 32-x ("x" steht für 1 bis 5) sind zur Seite hin so bemessen, dass sie in die Gasse passen. Das bedeutet zum Beispiel, dass die Lichtintensität des die Schutzfeldbereiche 32-1 bzw. 32-5 beleuchtenden Lichts 18-1 bzw. 18-5 sehr viel kleiner sein kann als beispielsweise in Geradeausrichtung (α = 0°), denn unter 0° müssen sehr viel weiter entfernt liegende Objekte gesehen werden. Genau das spiegelt sich in der Intensitätsverteilung aus Fig. 3 wieder. Besonders auffallend in der Intensitätsverteilung sind die beiden spitzen Intensitätserhöhungen 40 und 42 im ersten Teil 32-3 des Schutzfeldes, die sich von ca. -35° bis -18° und von ca. +18° bis +35° erstecken. Diese Erhöhungen resultieren aus der eingangs erwähnten Kosinusabhängigkeit bei der Remission von Licht. Das sind also die Bereiche, bei denen das Sendelicht auf die Wände 36 bzw. 38 in spitzem Winkel auftritt. Die Rückreflexion (Remission 26) in Senderichtung ist dann entsprechend der Kosinusabhängigkeit reduziert. Deshalb wird durch das DOE der Sendeoptik 20 Energie in diese Bereiche "umverteilt". Weit entfernte und in einem spitzen Winkel beleuchtete Bereiche werden mit höherer Lichtenergie ausgeleuchtet als nahgelegene in weniger spitzen Winkel. Die Detektion von Objekten wird dadurch quasi unabhängig vom Sendelichtwinkel, also unter jedem Sendelichtwinkel werden die Objekte gleich gut erkannt.

Selbstverständlich wird bei diesen Aussagen davon ausgegangen, dass die Oberflächen der Objekte bei den verschiedenen Winkeln bezüglich Remission gleichartig sind. Das ist in dem Ausführungsbeispiel der Fall, in dem die die Gasse bildenden Objekte 36 und 38 an jeder Stelle gleiche Remissionseigenschaften haben, z.B. wenn diese Objekte Wände sind.

Die Gesamtenergie eines Lichtpulses ist die Gesamtfläche unter den Kurven der Fig. 3. Daraus ist ersichtlich, dass durch die Umverteilung der Lichtintensität die Reichweite erhöht werden kann oder bei gleicher Reichweite Sendelichtenergie gespart werden kann und somit leistungsschwächere und damit kostengünstigere Lichtquellen eingesetzt werden können. Für das Ausführungsbeispiel beträgt die Energieersparnis etwa ein Faktor 3 gegenüber einer durchgehenden Linienbeleuchtung für die Schutzbereiche 18-x.

Im Prinzip ließen sich solche Intensitätsverteilungen auch mit einem Mikrolinsenarray erzielen. Das ist aber erheblich aufwändiger und kostspieliger.

## Patentansprüche

1. Optoelektronischer Sensor zur Detektion von Objekten (12) in seinem Sichtbereich (14) mit
- einem Lichtsender (16) zur Aussendung eines Sendelichtstrahls (18) in Form von Lichtpulsen,
- einer Sendeoptik (20), die den Sendelichtstrahl (18) in Teilstrahlen (18-1 bis 18-5) aufspaltet,
- einem ortsauflösenden Empfänger (24) zum Empfang von Remissionen (26) des Lichts an Objekten (12) im Sichtbereich und Bereitstellung von Empfangssignalen in Abhängigkeit des einfallenden Lichts,
- einer Empfangsoptik (30) zum Abbilden der Remissionen (26) auf den Empfänger (24),
- einer Steuer- und Auswerteeinheit (28) zur Ansteuerung des Lichtsenders (16) und zur Auswertung der Signale des Empfängers (24), wobei die Auswerteeinheit (28) ausgebildet ist, aus den Auftreffpunkten des Lichts die Richtung, aus der die Remission erfolgt ist, zu ermitteln und aus einer Laufzeit zwischen Aussendung und Empfang eines Lichtpulses die Entfernung der Remission zu ermitteln,
**dadurch gekennzeichnet, dass**
die Sendeoptik (20) ein diffraktives optisches Element (DOE) aufweist.

2. Sensor nach Anspruch 1, **dadurch gekennzeichnet, dass** der Lichtempfänger eine zweidimensionale Matrix von Empfangselementen aufweist und insbesondere als SPAD ausgebildet ist.

3. Sensor nach einem der vorhergehenden Ansprüche, **dadurch gekennzeichnet, dass** innerhalb des Sichtbereichs ein Schutzfeld definiert ist und dass die Sendeoptik derart ausgebildet ist, dass eine Remission an einem bekannten Objekt, das die Form des Schutzfeldrandes hat, an jedem Punkt des Schutzfeldrandes eine Remission erzeugt, deren Intensität unabhängig vom Sichtwinkel, unter dem die Remissionen detektiert wird, ist und unabhängig von der Entfernung der Remission ist.

4. Sensor nach einem der vorhergehenden Ansprüche, **dadurch gekennzeichnet, dass** die Sendeoptik den Sendelichtstrahl in einem ersten Winkelbereich linienförmig aufweitet und über diesen Winkelbereich hinaus in einzelne Lichtstrahlen aufspaltet.

5. Autonomes Fahrzeug, insbesondere fahrerloses Transportsystem (FTS), mit einem Sensor (10) nach einem der vorhergehenden Ansprüche 3 oder 4, **dadurch gekennzeichnet, dass** zumindest ein erster Teil (32-3) des Schutzfeldes (32) in Fahrtrichtung vor dem Fahrzeug (FTS) liegt und zumindest bereichsweise rechteckförmig ausgebildet ist, mit zwei in Fahrtrichtung verlaufenden Rändern (34-a, 34-b) und einem diese Ränder verbindenden frontseitigen Rand (34-c) quer zur Fahrtrichtung.

6. Fahrzeug nach Anspruch 5 mit einem Sensor nach Anspruch 4, **dadurch gekennzeichnet, dass** der erste Teil des Schutzfeldes durch den linienförmig aufgeweiteten Sendelichtstrahl ausgeleuchtet wird.

7. Fahrzeug nach Anspruch 6, **dadurch gekennzeichnet, dass** das Schutzfeld in größeren Winkelbereichen, die über den ersten Teil hinausgehen, durch einzelne, begrenzte Lichtstrahlen gebildet ist.
